# EUROPEAN PATENT SPECIFICATION

(11) **EP 4 210 999 B1**
(45) Date of publication and mention of the grant of the patent: **29.07.2026**
(21) Application number: 21794112.9
(22) Date of filing: 12.10.2021
(51) Int. Cl.: B60N 2/28

(54) **CHILD SAFETY SEAT**
KINDERSICHERHEITSSITZ
SIÈGE DE SÉCURITÉ POUR ENFANT

(30) Priority: 12.10.2020 CN 202022265906 U
(43) Date of publication of application: 19.07.2023
(73) Proprietor: Bambino Prezioso Switzerland AG, 6312 Steinhausen (CH)
(72) Inventor: LIU, Zu Jian, Dongguan, Guangdong 523000 (CN)
(74) Representative: Lucke, Andreas
(86) International application number: PCT/EP2021/078117
(87) International publication number: WO 2022/078988

(56) References cited:
- CN-Y- 201 124 777
- US-A- 4 971 392
- US-A1- 2009 091 167
- US-A1- 2019 077 282

## Description

### Field of the Invention

The present application relates to a child safety seat according to the precharacterizing portion of claim 1.

### Background of the Invention

A child safety seat is a device configured to be installed on a car and for allowing a child to sit therein to ensure the child's riding safety. Currently, there is a child safety seat having a base and a seat body pivotally installed on the base for enabling the child safety seat to be switchable between a forward-facing state and a rearward-facing state by a rotating movement of the seat body relative to the base according to the child's age or body shape. Besides, in order to ensure using safety, there is another child safety seat further having a locking device for locking the child safety seat to position the child safety seat in the forward-facing state or the rearward-facing state. However, the conventional locking device has complicated structure and difficult operation. Therefore, an improvement is required.

US 4,971,392 A discloses a safety swivel chair with a child restraint device that comprises a pedestal formed with a circular opening bordered by a lip. A substantially circular disk-shaped base is formed with a peripheral groove around its edge which receives the lip of the pedestal therein to pivotally engage the base to the pedestal.

US 2019/077282 A1 discloses a rotatable child safety seat including a seat base configured to rest on a vehicle seat and a seat shell for receiving a child therein. The seat shell can rotate with respect to the seat base and with a rotation axis offset from a center of the longitudinal axis of the seat base.

US 2009/091167 A1 discloses a seating system for a child that includes a base. A formed seat is arranged so as to communicate with and selectively rotate about the base. A retention apparatus includes a first handle and the retention apparatus secures the formed seat to the base. A single actuation and substantially continuous movement of the first handle causes the formed seat to move around the base with respect to at least two different axes.

CN 201124777 Y discloses a children car seat which comprises a seat and a pedestal arranged below the seat. The pedestal can rotate relative to the seat. The children car seat further comprises a locking mechanism which is arranged between the seat and the pedestal. The locking mechanism has a lock mode and an unlock mode. When the locking mechanism is in the lock mode, the seat and the pedestal are fixed to each other. When the locking mechanism is in the unlock mode, the seat and the pedestal can rotate relatively to each other.

### Summary of the Invention

Therefore, the present application aims to provide a child safety seat with simple structure and easy operation.

This is achieved by a child safety seat according to claim 1. The dependent claims pertain to corresponding further developments and improvements.

As will be seen more clearly from the detail description, the claimed child safety seat includes a base, a seat body, a locking device, at least one locked portion and an operating component. The seat body is installed on the base. The seat body is switchable between a forward-facing orientation and a rearward-facing orientation. The locking device is disposed on one of the seat body and the base. The at least one locked portion is disposed on another one of the seat body and the base. The locking device engages with the at least one locked portion to lock the seat body for restraining the seat body when the seat body is located in the forward-facing orientation or the rearward-facing orientation. The operating component is disposed on the seat body or the base. The operating component is movably linked to the locking device, and the operating component drives the locking device to disengage from the at least one locked portion for allowing the seat body to switch between the forward-facing orientation and the rearward-facing orientation.

According to an embodiment of the present application, the seat body is pivotally connected to the base around a pivoting axis.

According to an embodiment of the present application, the child safety seat further includes a first pivoting structure and a second pivoting structure. The first pivoting structure and the second pivoting structure are respectively disposed on the seat body and the base, so that the seat body is pivotally installed on the base by a cooperation of the first pivoting structure and the second pivoting structure.

According to an embodiment of the present application, one and another one of the first pivoting structure and the second pivoting structure are respectively a pivoting table and a pivoting recess.

According to an embodiment of the present application, the at least one locked portion includes two locked portions opposite to each other relative to the pivoting axis along a radial direction.

According to an embodiment of the present application, one of the two locked portions is disposed on a front portion of the another one of the seat body and the base. Another one of the two locked portions is disposed on a rear portion of the another one of the seat body and the base, and the locking device is disposed on a front portion or a rear portion of the one of the seat body and the base.

The locking device includes a locking component. The locking component is configured to be telescopic. The seat body is locked when the locking component extends outwardly to engage with the at least one locked portion, and the seat body is unlocked when the locking component retracts inwardly to disengage from the at least one locked portion.

According to an embodiment of the present application, the operating component is movably linked to the locking component.

According to an embodiment of the present application, the locking component engages with the at least one locked portion by an insertion of the locking component into the at least one locked portion.

According to an embodiment of the present application, the at least one locked portion is an engaging hole.

According to an embodiment of the present application, the child safety seat further includes a linking component disposed between the operating component and the locking component. A first end of the linking component is installed on the operating component, and a second end of the linking component is installed on the locking component.

According to an embodiment of the present application, the linking component is disposed inside the one of the seat body and the base.

According to an embodiment of the present application, the child safety seat further includes a resilient structure for configuring the locking component to be telescopic.

The locking device includes a sliding chamber and the locking component is slidably disposed inside the sliding chamber. A first opening is formed on the holding component and communicated with the sliding chamber.

According to an embodiment of the present application, the locking device further includes a holding component. The sliding chamber is formed on the holding component.. A second opening is formed on the one of the seat body and the base and mated to be communicated with the first opening, and the resilient structure is disposed between the locking component and the holding component for driving the locking component to extend out of the second opening.

A first stopping structure and a second stopping structure are formed on the sliding chamber. The first stopping structure is located adjacent to the first opening. The second stopping structure is located away from the first opening, and a stopped structure protrudes from an outer periphery of a portion of the locking component located between the first stopping structure and the second stopping structure.

The first stopping structure is a step-shaped structure, the second stopping structure is a protruding structure inwardly protruding from a wall of the sliding chamber, and the stopped structure is a ring-shaped structure.

According to an embodiment of the present application, the operating component is a handle or a button.

In contrast to the prior art, in the present application, the child safety seat is switchable between different states by a pivotal movement of the seat body relative to the base. The seat body can be locked and restrained from moving away from the forward-facing orientation or the rearward-facing orientation when the locking device engages with the locked portion. The operating component can be operated to drive the locking device to disengage from the locked portion to unlock the seat body for allowing the seat body to switch between the forward-facing orientation and the rearward-facing orientation. Therefore, the present application has advantages of simple structure and easy operation.

These and other objectives of the present application will no doubt become obvious to those of ordinary skill in the art after reading the following detailed description of the preferred embodiment that is illustrated in the various figures and drawings.

### Brief Description of the Drawings

In the following, the present application is further illustrated by way of example, taking reference to the accompanying drawings. Thereof
FIG. 1 to FIG. 3 are diagrams of a child safety seat in different states according to an embodiment of the present application,
FIG. 4 is a partial internal structural diagram of the child safety seat according to the embodiment of the present application,
FIG. 5 is an enlarged diagram of an A portion of the child safety seat shown in FIG. 4 according to the embodiment of the present application,
FIG. 6 is a partial diagram of the child safety seat according to the embodiment of the present application, and
FIG. 7 and FIG. 8 are diagrams of a base at different views according to the embodiment of the present application.

### Detailed Description

In order to illustrate technical specifications and structural features as well as achieved purposes and effects of the present application, relevant embodiments and figures are described as follows.

In the following detailed description of the preferred embodiments, reference is made to the accompanying drawings which form a part hereof, and in which is shown by way of illustration specific embodiments in which the present application may be practiced. In this regard, directional terminology, such as "top", "bottom", "right", "left", "front", "back", etc., is used with reference to the orientation of the Figure(s) being described. The components of the present application can be positioned in a number of different orientations. As such, the directional terminology is used for purposes of illustration and is in no way limiting. Accordingly, the drawings and descriptions will be regarded as illustrative in nature and not as restrictive. Also, the term "connect" is intended to mean either an indirect or direct mechanical connection. Thus, if a first device is connected to a second device, that connection may be through a direct mechanical connection, or through an indirect mechanical connection via other devices and connections.

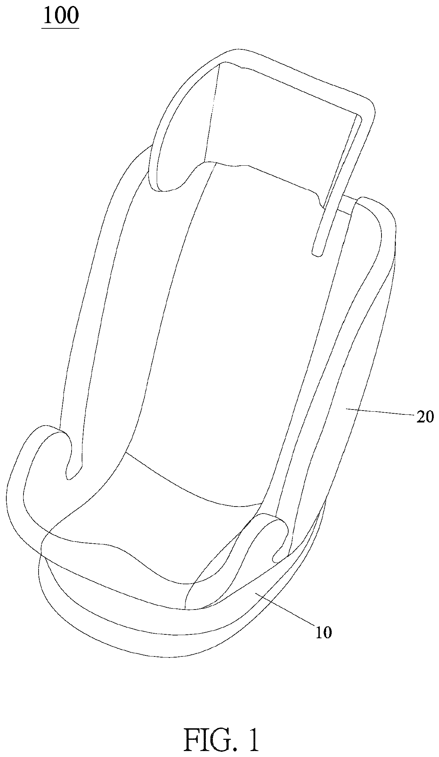

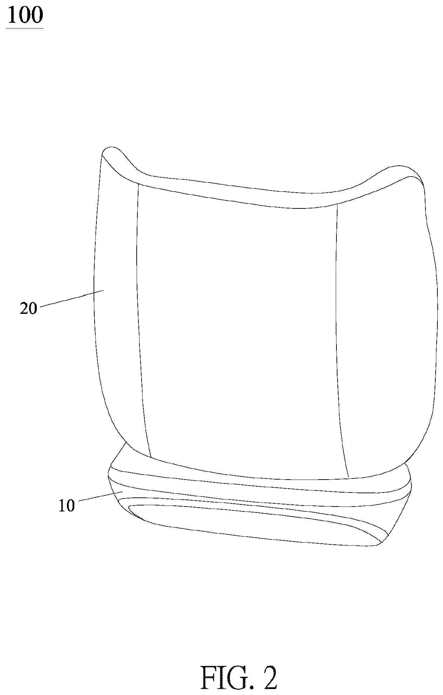

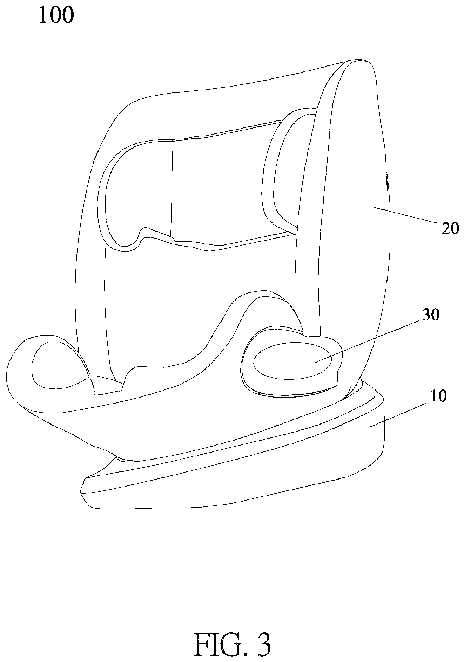

Please refer to FIG. 1 to FIG. 3. FIG. 1 to FIG. 3 are diagrams of a child safety seat 100 in different states according to an embodiment of the present application. As shown in FIG. 1 to FIG. 3, the child safety seat 100 includes a base 10, a seat body 20 installed on the base 10, and an operating component 30 disposed on the seat body 20. The seat body 20 is switchable between a forward-facing orientation as shown in FIG. 1 and a rearward-facing orientation as shown in FIG. 2 relative to the base 10. Furthermore, the child safety seat 100 further includes a locking device 40 disposed on the seat body 20, and two locked portions 11 disposed on the base 10 and for cooperating with the locking device 40. The locking device 40 can engage with the corresponding locked portions 11 for restraining the seat body 20 from moving relative to the base 10 when the seat body 20 is located in the forward-facing orientation as shown in FIG. 1 and the rearward-facing orientation as shown in FIG. 2 relative to the base 10. The operating component 30 is movably linked to the locking device 40 and configured to drive the locking device 40 to disengage from the corresponding locked portion 11 for allowing the seat body 20 to move relative to the base 10 when the operating component 30 is operated. In the present application, the child safety seat 100 is switchable between different states by a movement of the seat body 20 relative to the base 10. The seat body 20 can be locked and restrained from moving away from the forward-facing orientation or the rearward-facing orientation when the locking device 40 engages with the corresponding locked portion 11. The operating component 30 can be operated to drive the locking device 40 to disengage from the corresponding locked portion 11 to unlock the seat body 20 for allowing the seat body 20 to switch between the forward-facing orientation and the rearward-facing orientation. Therefore, the present application has advantages of simple structure and easy operation.

However, the configurations of the locking device, the locked portion and the operating component are not limited to this embodiment. Any structure or mechanism which utilizes engagement or disengagement of the locking device and the locked portion for restraining or allowing the movement of the seat body relative to the base is included within the scope of the present application. In other words, the locking device and the locked portion can be respectively disposed on one and another one of the seat body and the base, and the operating component can be disposed on the seat body or the base. For example, in another embodiment, the locking device and the locked portion can be respectively disposed on the seat body and the base, and the operating component can be disposed on the base. Alternatively, in another embodiment, the locking device and the locked portion can be respectively disposed on the base and the seat body, and the operating component can be disposed on the base. Alternatively, in another embodiment, the locking device and the locked portion can be respectively disposed on the base and the seat body, and the operating component can be disposed on the seat body.

Besides, the numbers of the locking device, the locked portion and the operating component are not limited to this embodiment. It depends on practical demands. For example, in another embodiment, the child safety seat can only include one locked portion, one locking device and one operating component, and the locking device can be configured to engage with the locked portion when the seat body is located in the forward-facing orientation or the rearward-facing orientation only.

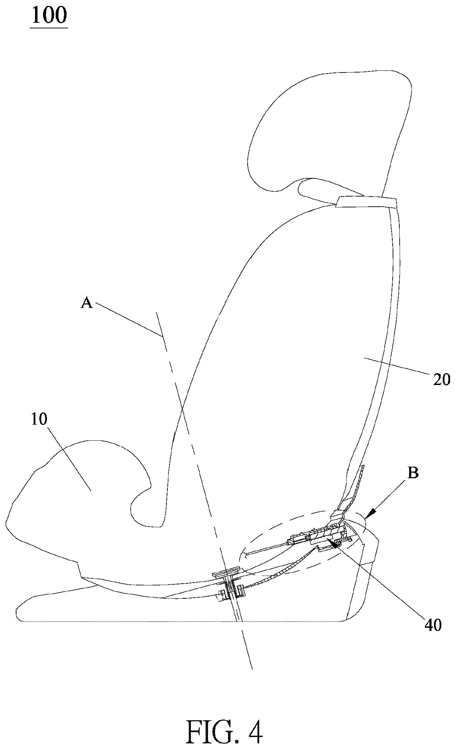

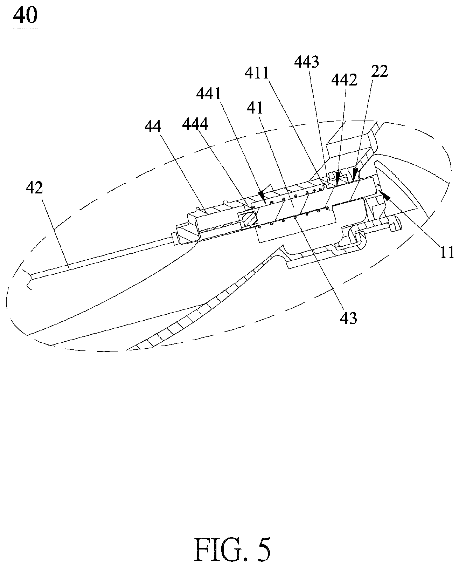

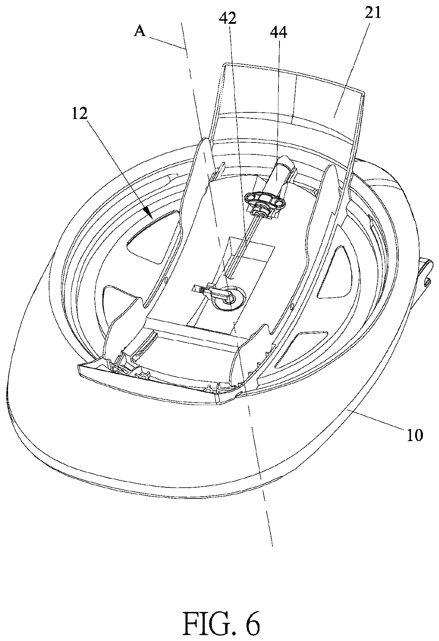

Please refer to FIG. 4 to FIG. 6. FIG. 4 is a partial internal structural diagram of the child safety seat 100 according to the embodiment of the present application. FIG. 5 is an enlarged diagram of an A portion of the child safety seat 100 shown in FIG. 4 according to the embodiment of the present application. FIG. 6 is a partial diagram of the child safety seat 100 according to the embodiment of the present application. As shown in FIG. 4 to FIG. 6, the seat body 20 is pivotally connected to the base 10 around a pivoting axis A for facilitating a switching operation of the seat body 20 relative to the base 10. Preferably, in this embodiment, a pivotal range of the seat body 20 relative to the base 10 around the pivoting axis A can be 360 degrees. However, the present application is not limited to this embodiment.

Specifically, in order to achieve a pivotal connection of the seat body 20 and the base 10, the child safety seat 100 further includes a first pivoting structure 21 disposed on the seat body 20 and a second pivoting structure 12 disposed on the base 10. The first pivoting structure 21 and the second pivoting structure 12 pivotally cooperate with each other. The seat body 20 can be pivotally installed on the base 10 by a pivotal cooperation of the first pivoting structure 21 and the second pivoting structure 12. Preferably, the first pivoting structure 21 is installed on a bottom portion of the seat body 20, and the second pivoting structure 12 is disposed on a top portion of the base 10, in order for easy installation. More specifically, in order to make structure of the child safety seat 100 more compact and aesthetic, the first pivoting structure 21 and the second pivoting structure 12 can be a pivoting table and a pivoting recess, respectively, and the pivoting table is disposed inside the pivoting recess. However, the present application is not limited thereto. For example, in another embodiment, the first pivoting structure and the second pivoting structure can be a pivoting recess disposed on the bottom portion of the seat body and a pivoting table installed on the top portion of the base, respectively.

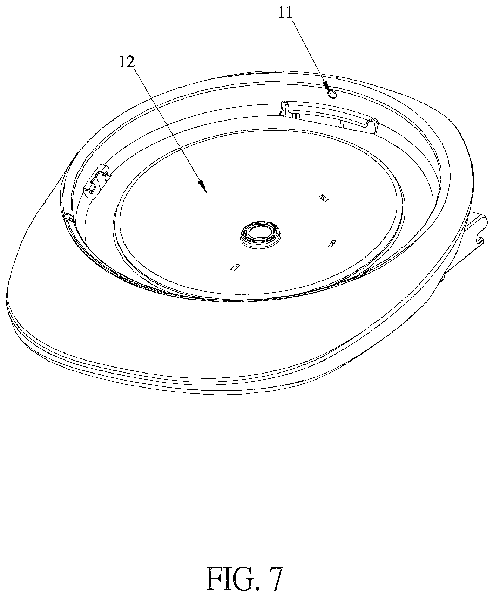

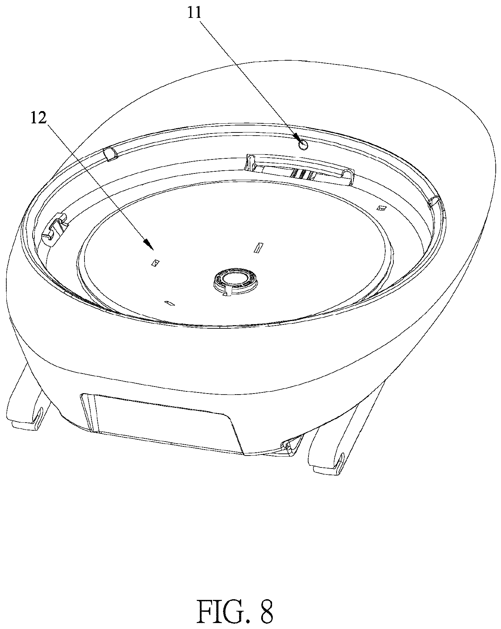

Please refer to FIG. 4 and FIG. 6 to FIG. 8. FIG. 7 and FIG. 8 are diagrams of the base 10 at different views according to the embodiment of the present application. As shown in FIG. 4 and FIG. 6 to FIG. 8, in order to allow the locking device 40 to engage with the corresponding locked portion 11 to lock the seat body 20 when the seat body 20 is located in the forward-facing orientation and the rearward-facing orientation, the two locked portions 11 are opposite to each other relative to the pivoting axis A along a radial direction. Specifically, one of the two locked portions 11 is disposed on a front portion of the base 10, and another one of the two locked portions 11 is disposed on a rear portion of the base 10. The locking device 40 is disposed on a rear portion of the seat body 20. In such a way, when the seat body 20 is located in the forward-facing orientation relative to the base 10, the locking device 40 is aligned with and engages with the locked portion 11 disposed on the rear portion of the base 10, i.e., the rear locked portion 11. When the seat body 20 is located in the rearward-facing orientation relative to the base 10, the locking device 40 is aligned with and engages with the locked portion 11 disposed on the front portion of the base 10, i.e., the front locked portion 11.

However, the present application is not limited to this embodiment. It depends on practical demands. In other words, the two locked portion can be disposed on any two opposite portions of one of the seat body and the base, and the locking device can be disposed on a corresponding portion of another one of the seat body and the base. For example, in another embodiment, when the child safety seat includes two locked portions disposed on the seat body and one locking device disposed on the base, the two locked portions can be located at a left portion and a right portion of the seat body, and the locking device can be located at a right portion of the base.

As shown in FIG. 4 to FIG. 8, the locking device 40 includes a locking component 41. The locking component 41 is configured to be telescopic. The operating component 30 is movably linked to the locking component 41. When the locking component 41 extends outwardly to engage with the corresponding locked portion 11, the seat body 20 is locked and restrained from moving relative to the base 10. When the locking component 41 retracts inwardly to disengage from the corresponding locked portion 11, the seat body 20 is unlocked and allowed to move relative to the base 10. Therefore, it is easy for a user to operate the operating component 30 to drive the locking component 41 to extend outwardly or retract inwardly to lock or unlock the seat body 20. Therefore, the present application has not only simple structure but also easy operation. Preferably, the locking component 41 engages with the corresponding locked portion 11 by an insertion of the locking component 41 into the corresponding locked portion 11. Specifically, the locked portion 11 can be an engaging hole. However, the present application is not limited thereto.

As shown in FIG. 4 to FIG. 8, in this embodiment, the operating component 30 can be a handle which drives the locking component 41 to retract inwardly relative to the seat body 20 to unlock the seat body 20 quickly when the handle is pulled by the user. However, the present application is not limited to this embodiment. For example, in another embodiment, the operating component can be a button which is configured to drive the locking component to retract inwardly relative to the seat body to unlock the seat body when the button is pressed by the user.

Furthermore, in order to allow the operating component 30 to drive the locking component 41 straightforwardly, the child safety seat 100 further includes a linking component 42 disposed between the operating component 30 and the locking component 41. A first end of the linking component 42 is installed on the operating component 30. A second end of the linking component 42 is installed on the locking component 42. Specifically, the linking component 42 is disposed inside the seat body 20 for hiding the linking component 42 to make structure of the child safety seat 100 compact and aesthetic.

As shown in FIG. 4 to FIG. 8, the child safety seat 100 further includes a resilient structure 43 for configuring the locking component 41 to be telescopic and driving the locking component 41 to extend outwardly to recover, so as to make structure of the child safety seat 100 more compact. Specifically, the locking device 40 further includes a holding component 44. A sliding chamber 441 is formed on the holding component 44. The locking component 41 is slidably disposed inside the sliding chamber 441. A first opening 442 is formed on the holding component 44 and communicated with the sliding chamber 441. A second opening 22 is formed on the seat body 20 and mated to be communicated with the first opening 442. The resilient structure 43 is disposed between the locking component 41 and the holding component 44 for driving the locking component 41 to extend out of the second opening 22. The aforementioned configuration enables the locking component 41 to slide stably. Therefore, the present application has better reliability.

When the seat body 20 is located in the forward-facing orientation or the rearward-facing orientation relative to the base 10, the second opening 22 is aligned with the corresponding locked portion 11. Therefore, the locking component 41 can be driven by the resilient structure 43 to extend out of the second opening 22 to engage with the corresponding locked portion 11 for locking the seat body 20, i.e., for restraining the seat body 20 from moving relative to the base 20. When the operating component 30 is operated, the operating component 30 can drive the locking component 41 to retract inwardly into the second opening 22 to disengage from the corresponding locked portion 11 for unlocking the seat body 20, i.e., for allowing the seat body 20 to move relative to the base 20.

Specifically, the holding component 44 can be a hollow cylinder-shaped structure. The locking component 41 can be a column-shaped structure. The linking component 42 passes through the holding component 44 to be installed on the locking component 41. However, the present application is not limited thereto. A first stopping structure 443 and a second stopping structure 444 are formed on the sliding chamber 441. The first stopping structure 443 is located adjacent to the first opening 442. The second stopping structure 444 is located away from the first opening 442. A stopped structure 411 protrudes from an outer periphery of a portion of the locking component 41 located between the first stopping structure 443 and the second stopping structure 444. The stopped structure 411 cooperates with the first stopping structure 443 and the second stopping structure 444 for restraining a traveling distance of the sliding locking component 41. The first stopping structure 443 can prevent an excessive extending movement of the locking component 41 for preventing a disengagement of the locking component 41 and the holding component 44. The second stopping structure 444 can prevent an excessive retracting movement of the locking component 41 for ensuring the locking component 41 to recover quickly. The first stopping structure 443 is a step-shaped structure. The second stopping structure 444 is a protruding structure inwardly protruding from a wall of the sliding chamber 441. The stopped structure 411 is a ring-shaped structure.

As shown in FIG. 1 to FIG. 8, operational principle of the child safety seat 100 is provided as follows. When it is desired to switch the seat body 20 from the forward-facing orientation as shown in FIG. 1 to the rearward-facing orientation as shown in FIG. 2, the user can pull the operating component 30 to drive the locking component 41 to retract inwardly relative to the seat body 20 by the linking component 42 to disengage the locking component 41 from the rear locked portion 11 for unlocking the seat body 20. When the seat body 20 is unlocked, the seat body 20 can be switched from the forward-facing orientation as shown in FIG. 1 to the rearward-facing orientation as shown in FIG. 2 by the pivotal movement of the seat body 20 relative to the base 10. When the seat body 20 is located in the rearward-facing orientation as shown in FIG. 2, the resilient structure 43 can drive the locking component 41 to extend outwardly relative to the seat body 20 to engage with the front locked portion 11 for locking the seat body 20 to position the seat body 20 in the rearward-facing orientation. Similarly, when it is desired to switch the seat body 20 from the rearward-facing orientation as shown in FIG. 2 to the forward-facing orientation as shown in FIG. 1, the user can pull the operating component 30 to drive the locking component 41 to retract inwardly relative to the seat body 20 by the linking component 42 to disengage the locking component 41 from the front locked portion 11 for unlocking the seat body 20. When the seat body 20 is unlocked, the seat body 20 can be switched from the rearward-facing orientation as shown in FIG. 2 to the forward-facing orientation as shown in FIG. 1 by the pivotal movement of the seat body 20 relative to the base 10. When the seat body 20 is located in the forward-facing orientation as shown in FIG. 1, the resilient structure 43 can drive the locking component 41 to extend outwardly relative to the seat body 20 to engage with the rear locked portion 11 for locking the seat body 20 to position the seat body 20 in the forward-facing orientation.

In contrast to the prior art, in the present application, the child safety seat is switchable between different states by a pivotal movement of the seat body relative to the base. The seat body can be locked and restrained from moving away from the forward-facing orientation or the rearward-facing orientation when the locking device engages with the locked portion. The operating component can be operated to drive the locking device to disengage from the locked portion to unlock the seat body for allowing the seat body to switch between the forward-facing orientation and the rearward-facing orientation. Therefore, the present application has advantages of simple structure and easy operation.

Those skilled in the art will readily observe that numerous modifications and alterations of the device and method may be made while retaining the teachings of the present application. Accordingly, the present application should be construed as limited only by the appended claims.

## Claims

1. A child safety seat (100) **characterized in that** the child safety seat (100) comprises:
a base (10);
a seat body (20) installed on the base (10), the seat body (20) being switchable between a forward-facing orientation and a rearward-facing orientation;
a locking device (40) disposed on one of the seat body (20) and the base (10);
at least one locked portion (11) disposed on another one of the seat body (20) and the base (10), the locking device (40) engaging with the at least one locked portion (11) when the seat body (20) is located in the forward-facing orientation or the rearward-facing orientation; and
an operating component (30) disposed on the seat body (20) or the base (10), the operating component (30) being movably linked to the locking device (40), and the operating component (30) driving the locking device (40) to disengage from the at least one locked portion (11) for allowing the seat body (20) to switch between the forward-facing orientation and the rearward-facing orientation,
wherein the locking device (40) comprises a telescopic locking component (41) and a sliding chamber (441) communicated with a first opening (442), wherein the locking component (41) is slidably disposed inside the sliding chamber (441), the seat body (20) is locked when the locking component (41) extends outwardly to engage with the at least one locked portion (11), and the seat body (20) is unlocked when the locking component (41) retracts inwardly to disengage from the at least one locked portion (11);
wherein the seat (100) is **characterized in that** a first step-shaped stopping structure (443) and a ring-shaped second stopping structure (444), inwardly protruding from a wall of the sliding chamber (441), are formed on the sliding chamber (441), the first stopping structure (443) is located adjacent to the first opening (442), the second stopping structure (444) is located away from the first opening (442), and a stopped structure (411) protrudes from an outer periphery of a portion of the locking component (41) located between the first stopping structure (443) and the second stopping structure (444).

2. The child safety seat (100) of claim 1, **characterized in that** the seat body (20) is pivotally connected to the base (10) around a pivoting axis (A).

3. The child safety seat (100) of claim 1 or 2, further **characterized by** a first pivoting structure (21) and a second pivoting structure (12), the first pivoting structure (21) and the second pivoting structure (12) being respectively disposed on the seat body (20) and the base (10), so that the seat body (20) is pivotally installed on the base (10) by a cooperation of the first pivoting structure (21) and the second pivoting structure (12).

4. The child safety seat (100) of claim 3, **characterized in that** one and another one of the first pivoting structure (21) and the second pivoting structure (12) are respectively a pivoting table and a pivoting recess.

5. The child safety seat (100) of claim 2, optionally in combination with claim 3 or 4, **characterized in that** the at least one locked portion (11) comprises two locked portions (11) opposite to each other relative to the pivoting axis (A) along a radial direction.

6. The child safety seat (100) of claim 5, **characterized in that** one of the two locked portions (11) is disposed on a front portion of the another one of the seat body (20) and the base (10), another one of the two locked portions (11) is disposed on a rear portion of the another one of the seat body (20) and the base (10), and the locking device (40) is disposed on a front portion or a rear portion of the one of the seat body (20) and the base (10).

7. The child safety seat (100) of any of the preceding claims, **characterized in that** the operating component (30) is movably linked to the locking component (41).

8. The child safety seat (100) of any one of the preceding claims, **characterized in that** the locking component (41) engages with the at least one locked portion (11) by an insertion of the locking component (41) into the at least one locked portion (11).

9. The child safety seat (100) of any of the preceding claims, **characterized in that** the at least one locked portion (11) is an engaging hole.

10. The child safety seat (100) of claim 7, optionally in combination with claim 8 or 9, further **characterized by** a linking component (42) disposed between the operating component (30) and the locking component (41), a first end of the linking component (42) being installed on the operating component (30), and a second end of the linking component (42) being installed on the locking component (41).

11. The child safety seat (100) of claim 10, **characterized in that** the linking component (42) is disposed inside the one of the seat body (20) and the base (10).

12. The child safety seat (100) of any one of the preceding claims, further **characterized by** a resilient structure (43) for configuring the locking component (41) to be telescopic.

13. The child safety seat (100) of claim 12, **characterized in that** the locking device (40) further comprises a holding component (44), wherein the sliding chamber (441) is formed on the holding component (44), a second opening (22) is formed on the one of the seat body (20) and the base (10) and mated to be communicated with the first opening (442), and the resilient structure (43) is disposed between the locking component (41) and the holding component (44) for driving the locking component (41) to extend out of the second opening (22).

14. The child safety seat (100) of any of the preceding claims, **characterized in that** the operating component (30) is a handle or a button.

## Patentansprüche

1. Kindersicherheitssitz (100), **dadurch gekennzeichnet, dass** der Kindersicherheitssitz (100) umfasst:
eine Basis (10);
einen Sitzkörper (20), der auf der Basis (10) installiert ist, wobei der Sitzkörper (20) zwischen einer nach vorne gerichteten Ausrichtung und einer nach hinten gerichteten Ausrichtung umschaltbar ist;
eine Verriegelungsvorrichtung (40), die auf einem von dem Sitzkörper (20) und der Basis (10) angeordnet ist;
mindestens einen verriegelten Abschnitt (11), der auf einem anderen von dem Sitzkörper (20) und der Basis (10) angeordnet ist, wobei die Verriegelungsvorrichtung (40) mit dem mindestens einen verriegelten Abschnitt (11) in Eingriff steht, wenn sich der Sitzkörper (20) in der nach vorne gerichteten Ausrichtung oder der nach hinten gerichteten Ausrichtung befindet; und
eine Betätigungskomponente (30), die auf dem Sitzkörper (20) oder der Basis (10) angeordnet ist, wobei die Betätigungskomponente (30) beweglich mit der Verriegelungsvorrichtung (40) verbunden ist und die Betätigungskomponente (30) die Verriegelungsvorrichtung (40) antreibt, um sich von dem mindestens einen verriegelten Abschnitt (11) zu lösen, um dem Sitzkörper (20) zu ermöglichen, zwischen der nach vorne gerichteten Ausrichtung und der nach hinten gerichteten Ausrichtung umzuschalten,
wobei die Verriegelungsvorrichtung (40) eine teleskopische Verriegelungskomponente (41) und eine Gleitkammer (441), die mit einer ersten Öffnung (442) in Verbindung steht, umfasst, wobei die Verriegelungskomponente (41) verschiebbar innerhalb der Gleitkammer (441) angeordnet ist, der Sitzkörper (20) verriegelt ist, wenn sich die Verriegelungskomponente (41) nach außen erstreckt, um mit dem mindestens einen verriegelten Abschnitt (11) in Eingriff zu stehen, und der Sitzkörper (20) entriegelt ist, wenn sich die Verriegelungskomponente (41) nach innen zurückzieht, um sich von dem mindestens einen verriegelten Abschnitt (11) zu lösen;
wobei der Sitz (100) **dadurch gekennzeichnet ist, dass** eine erste stufenförmige Stoppstruktur (443) und eine ringförmige zweite Stoppstruktur (444), die von einer Wand der Gleitkammer (441) nach innen vorstehen, auf der Gleitkammer (441) ausgebildet sind, sich die erste Stoppstruktur (443) neben der ersten Öffnung (442) befindet, sich die zweite Stoppstruktur (444) von der ersten Öffnung (442) entfernt befindet und eine gestoppte Struktur (411) von einem Außenumfang eines Abschnitts der Verriegelungskomponente (41), der sich zwischen der ersten Stoppstruktur (443) und der zweiten Stoppstruktur (444) befindet, vorsteht.

2. Kindersicherheitssitz (100) nach Anspruch 1, **dadurch gekennzeichnet, dass** der Sitzkörper (20) um eine Schwenkachse (A) schwenkbar mit der Basis (10) verbunden ist.

3. Kindersicherheitssitz (100) nach Anspruch 1 oder 2, ferner **gekennzeichnet durch** eine erste Schwenkstruktur (21) und eine zweite Schwenkstruktur (12), wobei die erste Schwenkstruktur (21) und die zweite Schwenkstruktur (12) jeweils auf dem Sitzkörper (20) und der Basis (10) angeordnet sind, so dass der Sitzkörper (20) durch ein Zusammenwirken der ersten Schwenkstruktur (21) und der zweiten Schwenkstruktur (12) schwenkbar auf der Basis (10) installiert ist.

4. Kindersicherheitssitz (100) nach Anspruch 3, **dadurch gekennzeichnet, dass** eine und eine andere der ersten Schwenkstruktur (21) und der zweiten Schwenkstruktur (12) ein Schwenktisch bzw. eine Schwenkaussparung sind.

5. Kindersicherheitssitz (100) nach Anspruch 2, optional in Kombination mit Anspruch 3 oder 4, **dadurch gekennzeichnet, dass** der mindestens eine verriegelte Abschnitt (11) zwei verriegelte Abschnitte (11) umfasst, die in Bezug auf die Schwenkachse (A) entlang einer radialen Richtung einander gegenüberliegen.

6. Kindersicherheitssitz (100) nach Anspruch 5, **dadurch gekennzeichnet, dass** einer der zwei verriegelten Abschnitte (11) auf einem vorderen Abschnitt des anderen von dem Sitzkörper (20) und der Basis (10) angeordnet ist, ein anderer der zwei verriegelten Abschnitte (11) auf einem hinteren Abschnitt des anderen von dem Sitzkörper (20) und der Basis (10) angeordnet ist und die Verriegelungsvorrichtung (40) auf einem vorderen Abschnitt oder einem hinteren Abschnitt des einen von dem Sitzkörper (20) und der Basis (10) angeordnet ist.

7. Kindersicherheitssitz (100) nach einem der vorhergehenden Ansprüche, **dadurch gekennzeichnet, dass** die Betätigungskomponente (30) beweglich mit der Verriegelungskomponente (41) verbunden ist.

8. Kindersicherheitssitz (100) nach einem der vorhergehenden Ansprüche, **dadurch gekennzeichnet, dass** die Verriegelungskomponente (41) mit dem mindestens einen verriegelten Abschnitt (11) durch ein Einsetzen der Verriegelungskomponente (41) in den mindestens einen verriegelten Abschnitt (11) in Eingriff steht.

9. Kindersicherheitssitz (100) nach einem der vorhergehenden Ansprüche, **dadurch gekennzeichnet, dass** der mindestens eine verriegelte Abschnitt (11) ein Eingriffsloch ist.

10. Kindersicherheitssitz (100) nach Anspruch 7, optional in Kombination mit Anspruch 8 oder 9, ferner **gekennzeichnet durch** eine Verbindungskomponente (42), die zwischen der Betätigungskomponente (30) und der Verriegelungskomponente (41) angeordnet ist, wobei ein erstes Ende der Verbindungskomponente (42) auf der Betätigungskomponente (30) installiert ist und ein zweites Ende der Verbindungskomponente (42) auf der Verriegelungskomponente (41) installiert ist.

11. Kindersicherheitssitz (100) nach Anspruch 10, **dadurch gekennzeichnet, dass** die Verbindungskomponente (42) innerhalb des einen von dem Sitzkörper (20) und der Basis (10) angeordnet ist.

12. Kindersicherheitssitz (100) nach einem der vorhergehenden Ansprüche, ferner **gekennzeichnet durch** eine elastische Struktur (43) zum Konfigurieren der Verriegelungskomponente (41), um teleskopisch zu sein.

13. Kindersicherheitssitz (100) nach Anspruch 12, **dadurch gekennzeichnet, dass** die Verriegelungsvorrichtung (40) ferner eine Haltekomponente (44) umfasst, wobei die Gleitkammer (441) an der Haltekomponente (44) ausgebildet ist, eine zweite Öffnung (22) an dem einen von dem Sitzkörper (20) und der Basis (10) ausgebildet ist und zusammenpasst, um mit der ersten Öffnung (442) in Verbindung zu stehen, und die elastische Struktur (43) zwischen der Verriegelungskomponente (41) und der Haltekomponente (44) angeordnet ist, um die Verriegelungskomponente (41) anzutreiben, um sich aus der zweiten Öffnung (22) heraus zu erstrecken.

14. Kindersicherheitssitz (100) nach einem der vorhergehenden Ansprüche, **dadurch gekennzeichnet, dass** die Betätigungskomponente (30) ein Griff oder ein Knopf ist.

## Revendications

1. Un siège de sécurité pour enfant (100) **caractérisé en ce que** le siège de sécurité pour enfant (100) comprend :
une base (10) ;
un corps de siège (20) installé sur la base (10), le corps de siège (20) étant commutable entre une orientation orientée vers l'avant et une orientation orientée vers l'arrière ;
un dispositif de verrouillage (40) disposé sur l'un du corps de siège (20) et de la base (10) ;
au moins une portion verrouillée (11) disposée sur l'autre du corps de siège (20) et de la base (10), le dispositif de verrouillage (40) venant en prise avec la au moins une portion verrouillée (11) lorsque le corps de siège (20) est situé dans l'orientation orientée vers l'avant ou l'orientation orientée vers l'arrière ; et
un composant d'actionnement (30) disposé sur le corps de siège (20) ou la base (10), le composant d'actionnement (30) étant relié de manière mobile au dispositif de verrouillage (40), et le composant d'actionnement (30) entraînant le dispositif de verrouillage (40) à se désengager de la au moins une portion verrouillée (11) afin de permettre au corps de siège (20) de commuter entre l'orientation orientée vers l'avant et l'orientation orientée vers l'arrière,
dans lequel le dispositif de verrouillage (40) comprend un composant de verrouillage télescopique (41) et une chambre coulissante (441) communiquée avec une première ouverture (442), lequel composant de verrouillage (41) est disposé de manière coulissante à l'intérieur de la chambre coulissante (441), le corps de siège (20) étant verrouillé lorsque le composant de verrouillage (41) s'étend vers l'extérieur pour venir en prise avec la au moins une portion verrouillée (11), et le corps de siège (20) étant déverrouillé lorsque le composant de verrouillage (41) se rétracte vers l'intérieur pour se désengager de la au moins une portion verrouillée (11) ;
dans lequel le siège (100) est **caractérisé en ce qu'**une première structure d'arrêt en forme de marche (443) et une seconde structure d'arrêt en forme d'anneau (444), faisant saillie vers l'intérieur à partir d'une paroi de la chambre coulissante (441), sont formées sur la chambre coulissante (441), la première structure d'arrêt (443) étant située à proximité de la première ouverture (442), la seconde structure d'arrêt (444) étant située à l'écart de la première ouverture (442), et une structure arrêtée (411) fait saillie à partir d'une périphérie extérieure d'une portion du composant de verrouillage (41) située entre la première structure d'arrêt (443) et la seconde structure d'arrêt (444).

2. Le siège de sécurité pour enfant (100) selon la revendication 1, **caractérisé en ce que** le corps de siège (20) est relié de manière pivotante à la base (10) autour d'un axe de pivotement (A).

3. Le siège de sécurité pour enfant (100) selon l'une quelconque des revendications 1 à 2, en outre **caractérisé par** une première structure de pivotement (21) et une seconde structure de pivotement (12), la première structure de pivotement (21) et la seconde structure de pivotement (12) étant respectivement disposées sur le corps de siège (20) et la base (10), de sorte que le corps de siège (20) est installé de manière pivotante sur la base (10) par coopération de la première structure de pivotement (21) et de la seconde structure de pivotement (12).

4. Le siège de sécurité pour enfant (100) selon la revendication 3, **caractérisé en ce que** l'une et l'autre de la première structure de pivotement (21) et de la seconde structure de pivotement (12) sont respectivement une table de pivotement et un évidement de pivotement.

5. Le siège de sécurité pour enfant (100) selon la revendication 2, éventuellement en combinaison avec la revendication 3 ou 4, **caractérisé en ce que** la au moins une portion verrouillée (11) comprend deux portions verrouillées (11) opposées l'une à l'autre par rapport à l'axe de pivotement (A) selon une direction radiale.

6. Le siège de sécurité pour enfant (100) selon la revendication 5, **caractérisé en ce que** l'une des deux portions verrouillées (11) est disposée sur une partie avant de l'autre du corps de siège (20) et de la base (10), l'autre des deux portions verrouillées (11) est disposée sur une partie arrière de l'autre du corps de siège (20) et de la base (10), et le dispositif de verrouillage (40) est disposé sur une partie avant ou une partie arrière de l'un du corps de siège (20) et de la base (10).

7. Le siège de sécurité pour enfant (100) selon l'une quelconque des revendications précédentes, **caractérisé en ce que** le composant d'actionnement (30) est relié de manière mobile au composant de verrouillage (41).

8. Le siège de sécurité pour enfant (100) selon l'une quelconque des revendications précédentes, **caractérisé en ce que** le composant de verrouillage (41) vient en prise avec la au moins une portion verrouillée (11) par une insertion du composant de verrouillage (41) dans la au moins une portion verrouillée (11).

9. Le siège de sécurité pour enfant (100) selon l'une quelconque des revendications précédentes, **caractérisé en ce que** la au moins une portion verrouillée (11) est un trou d'engagement.

10. Le siège de sécurité pour enfant (100) selon la revendication 7, éventuellement en combinaison avec la revendication 8 ou 9, en outre **caractérisé par** un composant de liaison (42) disposé entre le composant d'actionnement (30) et le composant de verrouillage (41), une première extrémité du composant de liaison (42) étant installée sur le composant d'actionnement (30), et une seconde extrémité du composant de liaison (42) étant installée sur le composant de verrouillage (41).

11. Le siège de sécurité pour enfant (100) selon la revendication 10, **caractérisé en ce que** le composant de liaison (42) est disposé à l'intérieur de l'un du corps de siège (20) et de la base (10).

12. Le siège de sécurité pour enfant (100) selon l'une quelconque des revendications précédentes, en outre **caractérisé par** une structure élastique (43) pour configurer le composant de verrouillage (41) à être télescopique.

13. Le siège de sécurité pour enfant (100) selon la revendication 12, **caractérisé en ce que** le dispositif de verrouillage (40) comprend en outre un composant de maintien (44), lequel la chambre coulissante (441) est formée sur le composant de maintien (44), une seconde ouverture (22) est formée sur l'un du corps de siège (20) et de la base (10) et adaptée pour être communiquée avec la première ouverture (442), et la structure élastique (43) est disposée entre le composant de verrouillage (41) et le composant de maintien (44) pour entraîner le composant de verrouillage (41) à s'étendre hors de la seconde ouverture (22).

14. Le siège de sécurité pour enfant (100) selon l'une quelconque des revendications précédentes, **caractérisé en ce que** le composant d'actionnement (30) est une poignée ou un bouton.
